(19) Europäisches Patentamt
European Patent Office
Office européen des brevets

(11) **EP 1 084 749 A2**

(12) **EUROPÄISCHE PATENTANMELDUNG**

(43) Veröffentlichungstag:
21.03.2001 Patentblatt 2001/12

(51) Int. Cl.[7]: **B01J 23/94**, B01J 38/12,
C01B 3/34, C01B 3/36,
C01B 3/38

(21) Anmeldenummer: 00118333.4

(22) Anmeldetag: 24.08.2000

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **17.09.1999 DE 19944536**

(71) Anmelder: **XCELLSIS GmbH
73230 Kirchheim/Teck-Nabern (DE)**

(72) Erfinder:
• **Saling, Carlo
73265 Dettingen/Teck (DE)**
• **Schüssler, Martin, Dr.
89073 Ulm (DE)**
• **Stefanovski, Thomas
71034 Böblingen (DE)**

(74) Vertreter:
**Dahmen, Toni, Dipl.-Ing. et al
DaimlerChrysler AG,
FTP, C 106
70546 Stuttgart (DE)**

(54) **Verfahren zur periodischen Reaktivierung eines kupferhaltigen Katalysatormaterials**

(57) Die Erfindung bezieht sich auf ein Verfahren zur periodischen Reaktivierung von kupferhaltigem Katalysatormaterial, das in einen Reaktor zur katalytischen Umsetzung eines Kohlenwasserstoff- oder Kohlenwasserstoffderivat-Einsatzstoffs eingebracht ist und sich durch die Umsetzungsreaktion allmählich deaktiviert, wobei das Katalysatormaterial zur Reaktivierung mit einem sauerstoffhaltigen Gasstrom beaufschlagt wird.

Erfindungsgemäß wird bei betriebswarmem Reaktor die Beaufschlagung des Katalysatormaterials mit dem sauerstoffhaltigen Gasstrom jeweils spätestens dann unterbrochen, wenn die überwachte Temperatur des Katalysatormaterials einen Maximalwert überschreitet, der um einen vorgebbaren Toleranzwert über einem vorgegebenen Betriebstemperaturniveau liegt. In Kaltstartphasen wird dem Katalysatormaterial zunächst ein Gemisch aus einem Brennstoff und einem sauerstoffhaltigen Gasstrom zugeleitet, bis die überwachte Temperatur des Katalysatormaterials einen vorgebbaren Umschaltwert überschreitet, wonach nur noch der sauerstoffhaltige Gasstrom zugeführt wird. Zum Warmhalten des Reaktors nach Beendigung des Betries kann die Reaktivierung jeweils beim Unterschreiten eines weiteren Umschaltwertes aktiviert werden.

**Beschreibung**

Die Erfindung bezieht sich auf ein Verfahren zur periodischen Reaktivierung von kupferhaltigem Katalysatormaterial, das in einem Reaktor zu katalytischen Umsetzung eines Kohlenwasserstoff- oder Kohlenwasserstoffderivat-Einsatzstoffs mittels einer Oxidations- und/oder einer Reformierungs-Umsetzungsreaktion eingebracht ist und sich durch die Umsetzungsreaktion allmählich deaktiviert.

Kupferhaltige Katalysatormaterialien werden beispielsweise in Reaktoren eingesetzt, die in Brennstoffzellenfahrzeugen zur Gewinnung von Wasserstoff durch katalytische Umsetzung von Methanol o.dgl. mittels einer partiellen Oxidationsreaktion und/oder einer Wasserdampf-Reformierungsreaktion verwendet werden. Bekanntermaßen wird das Katalysatormaterial durch die Methanolumsetzungsreaktion allmählich deaktiviert. Damit es im wesentlichen wieder seine ursprüngliche Aktivität zurückgewinnt, sind verschiedene Verfahren zur periodischen Reaktivierung des Katalysatormaterials bekannt.

Eine dieser bekannten Reaktivierungstechniken besteht aus dem gattungsgemäßen Verfahren, das deaktivierte Katalysatormaterial mit einem sauerstoffhaltigen Gasstrom, z.B. Luft, zu beaufschlagen. In der Auslegeschrift DE 1 246 688 wird hierzu speziell vorgeschlagen, den normalen Reaktorbetrieb, mit dem dort eine Wasserdampfreformierung von Methanol bei einer Temperatur von 150°C bis 400°C durchgeführt wird, periodisch zu unterbrechen und das Katalysatormaterial durch Beaufschlagen mit dem sauerstoffhaltigen Gasstrom bei einer Temperatur im Bereich von 150°C bis 450°C zu regenerieren, d.h. zu reaktivieren, und im Anschluß daran das Katalysatormaterial mit einem wasserstoffhaltigen Gasstrom zu beaufschlagen, bevor mit dem normalen Methanolumsetzungsbetrieb fortgesetzt wird. In der Offenlegungsschrift JP 4-200640 (A) wird zur Reaktivierung des kupferhaltigen Katalysatormaterials die Beaufschlagung mit einem sauerstoffhaltigen Gasstrom, der höchstens 5 Mol% molekularen Sauerstoff enthält, bei einer Temperatur zwischen 120°C und 650°C vorgeschlagen.

Die Patentschrift US 4.855.267 gibt ein zweistufiges Reaktivierungsverfahren an, bei dem das deaktivierte, kupferhaltige Katalysatormaterial zunächst bei einer Temperatur zwischen 275°C und 400°C mit einem sauerstoffhaltigen Gasstrom, der mindestens 1Vol.-% Sauerstoff enthält, für etwa zwei Stunden bis achtzehn Stunden beaufschlagt wird, wonach das solchermaßen oxidierte Katalysatormaterial in einer reduzierenden Atmosphäre bei einer Temperatur zwischen 100°C und 400°C für etwa zwei Stunden bis drei Stunden einer reduzierenden Behandlung unterzogen wird.

Aus der Patentschrift DE 1 246 688 ist ein Verfahren zur katalytischen Wasserdampfreformierung von Methanol bekannt, bei dem in periodisch von Regenerationsphasen unterbrochenen Reaktionsphasen das Einsatzdampfgemisch katalytisch bei 150°C bis 400°C, bevorzugt bei 240°C bis 270°C, umgesetzt wird. In den Regenerationsphasen wird das Katalysatorsystem, das bevorzugt aus einem Nickelkatalysator einerseits und einem Zink-/Kupferhaltigen Katalysator andererseits in getrennten Reaktoren besteht, durch Behandlung mit einem sauerstoffhaltigen Gas bei erhöhten Temperaturen regeneriert, vorzugsweise bei Temperaturen im Bereich von 150°C bis 450°C. Vor der Wiederaufnahme der Methanolumsetzungsreaktion kann vorgesehen sein, ein wasserstoffhaltiges Gas bei erhöhten Temperaturen zur Reaktivierung des Nickelkatalysators über die Katalysatorbetten zu leiten.

In der Auslegeschrift DE 1 094 244 ist ein Verfahren zum Regenerieren eines Katalysators aus Kupfer und Natriumsilikat durch Oxidation eines darauf abgelagerten, kohlenstoffhaltigen Rückstandes mittels eines heißen, oxidierenden Gases beschrieben, das einen Gehalt an molekularem Sauerstoff von weniger als 1,5Vol.% aufweist und über den Katalysator im wesentlichen unter Vermeidung einer Wasserdampfkondensation bei einer Temperatur geleitet wird, die über 105°C, aber unter der von dar Natriumsilikatmenge abhängigen Sintertemperatur des Kupfers liegt. Der Regenerationsvorgang wird erst beendet, wenn das Kupfer praktisch vollständig zu Kupferoxid oxidiert ist. An-schließend wird die Temperatur auf eine oberhalb der Sintertem-peratur des Kupfers, jedoch unterhalb von 425°C liegende Tem-peratur erhöht und weiterhin das sauerstoffhaltige Gas hin-durchgeleitet.

Der Erfindung liegt als technisches Problem die Bereitstellung eines Verfahrens der eingangs genannten Art zugrunde, mit dem ein sich im normalen Betrieb allmählich deaktivierendes Katalysatormaterial relativ einfach und effektiv reaktivieren läßt und das sich insbesondere auch gut für einen mobilen Einsatz beispielsweise in Brennstoffzellenfahrzeugen eignet, ohne deren Fahrbetrieb signifikant zu stören.

Die Erfindung löst dieses Problem durch die Bereitstellung eines Verfahrens mit den Merkmalen des Anspruchs 1 oder 4.

Das Verfahren nach Anspruch 1 bezieht sich speziell auf den betriebswarmen Zustand des das Katalysatormaterial beinhaltenden Reaktors und sieht vor, dass eine zwecks Reaktivierung des Katalysatormaterials begonnene Beaufschlagung desselben mit dem sauerstoffhaltigen Gasstrom immer spätestens dann unterbrochen wird, wenn die überwachte Temperatur des Katalysatormaterials einen Maximalwert überschreitet, der um mehr als einen vorgebbaren Toleranzwert über einem für die Umsetzungsreaktion des Kohlenwasserstoff- oder Kohlenwasserstoffderivat-Einsatzstoffs vorgegebenen Betriebstemperaturniveau liegt. Dies resultiert dann beispielsweise in einem Reaktivierungsverlauf, der verhältnismäßig kurze Pulse des sauerstoffhaltigen Gasstroms beinhaltet, mit denen das Katalysatormaterial beaufschlagt wird, während das sich durch die Sauerstoffeinwirkung aufgrund exothermer Oxidationsprozesse (Oxidation des Kupfers und/oder einer Ablagerung auf dem Katalysatormaterial) aufheizende Katalysatormaterial in den Zeiträumen zwischen aufeinanderfolgenden sauerstoffhaltigen Gasstrompulsen wieder unter den vorgebbaren Temperaturmaximalwert abkühlen kann. Überhitzungen des Katalysatormaterials lassen sich auf diese Weise zuverlässig verhindern.

In einer Weiterbildung dieses Verfahrens ist gemäß Anspruch 3 die Verwendung eines mit Wasserdampf verdünnten Luftstroms als sauerstoffhaltiger Gasstrom für die Reaktivierung des kupferhaltigen Katalysatormaterials vorgesehen. Durch die Verdünnung läßt sich die Dauer der einzelnen Beaufschlagungszyklen mit dem sauerstoffhaltigen Gasstrom im Vergleich zur Verwendung unverdünnter Luft oder eines Gasstroms mit demgegenüber noch höherem Sauerstoffanteil verlängern, ohne daß die Temperatur des Katalysatormaterials über den vorgegebenen Maximalwert ansteigt. Gegebenenfalls kann die Verdünnung so hoch gewählt sein, daß der gesamte Reaktivierungsvorgang ohne Unterbrechung der Beaufschlagung des Katalysatormaterials mit dem sauerstoffhaltigen Gasstrom durchgeführt werden kann. Wasserdampf wird auch bei einer Weiterbildung des Verfahrens nach Anspruch 4 eingesetzt, in diesem Fall speziell als Zwischenspülmedium vor und/oder nach der Beaufschlagung mit dem sauerstoffhaltigen Gasstrom. Damit läßt sich ein Aufeinandertreffen von Sauerstoff und dem katalytisch umzusetzenden Einsatzstoff in exothermen Stöchiometrieanteilen verhindern, die durch Oxidieren von Einsatzstoff eine noch stärkere Erhitzung des Katalysatormaterials zur Folge hätten. Die Verwendung von Wasser als Verdünnungs- bzw. Zwischenspülmedium hat speziell im mobilen Einsatzfall von Brennstoffzellenfahrzeugen den Vorteil, daß es dort ohnehin zur Durchführung der Wasserdampf-Reformierungsreaktion des Einsatzstoffs, wie z.B. Methanol, vorhanden ist.

Beim Einsatz eines Reaktors in einem Fahrzeug kann die Reaktivierung vorzugsweise dann gestartet werden, wenn ein Betankungsvorgang erkannt wird. Da ein solcher Betankungsvorgang eine absehbare Zeit benötigt ist in diesem Falle nicht mit einer Störung des Normalbetriebes durch die Reaktivierung zu rechnen.

Alternativ kann die Reaktivierung natürlich auch durch den Fahrer selbst ausgelöst werden.

Das Verfahren nach Anspruch 6 ist speziell für Kaltstartphasen des Reaktors gedacht und sieht in diesem Fall vor, das Katalysatormaterial zunächst mit einem Gemisch aus einem Brennstoff und einem sauerstoffhaltigen Gasstrom zu beaufschlagen, wodurch eine exotherme Oxidation des Brennstoffs und gleichzeitig schon eine Oxidation des Katalysators und/oder einer Ablagerung auf dem Katalysator erfolgen. Durch die beiden exothermen Prozesse erreicht das Katalysatormaterial relativ rasch eine Temperatur, bei welcher die Katalysatoroxidation und/oder die Oxidation der Ablagerungen ausreichend effektiv ablaufen kann, wonach dann die Zufuhr des Brennstoffs beendet und das Katalysatormaterial nur noch mit dem sauerstoffhaltigen Gasstrom beaufschlagt wird. Die Temperatur, bei der diese Umschaltung auf alleinige Zufuhr des sauerstoffhaltigen Gasstroms erfolgt, liegt typischerweise noch deutlich unter dem Betriebstemperaturniveau für die normale katalytische Umsetzungsreaktion des Einsatzstoffs. Die Zuführung des sauerstoffhaltigen Gasstroms wird entsprechend der Vorgehensweise nach Anspruch 1 spätestens dann beendet, wenn die überwachte Temperatur des Katalysatormaterials den vorgebbaren Maximalwert überschreitet, sofern nicht schon zuvor der Reaktivierungsvorgang deshalb beendet wurde, weil das Katalysatormaterial seinen frischen, reaktivierten Zustand wieder erreicht hat.

In einer Weiterbildung dieses Verfahrens ist gemäß Anspruch 7 vorgesehen, den Sauerstoffanteil im anfänglich zugeführten Gemisch deutlich überstöchiometrisch einzustellen. Weiterhin kann es vorteilhaft sein, die Stöchiometrie des Gasstromes nicht schlagartig von einem vorgegeben Wert auf Null umzuschalten, sondern die Stöchiometrie bereits während der Kaltstartphase zu verändern. Hierbei kann das Verhältnis zwischen Brennstoffmengenstrom $F_B$ und Sauerstoffmengenstrom $F_O$ von unterstöchiometrischer Verbrennung ($F_B/F_O > 2/3$ bei Methanol als Brennstoff) bis hin zu einem brennstofffreien Gasgemisch ($F_B/F_O =0$) liegen und während des Starts variabel eingestellt werden.

In weiterer Ausgestaltung dieses Reaktivierungsverfahrens für Reaktorkaltstartphasen wird gemäß Anspruch 9 der Temperaturumschaltwert für das Umschalten auf alleinige Zufuhr des sauerstoffhaltigen Gasstroms im Bereich zwischen 100°C und 200°C, vorzugsweise im Bereich von etwa 150°C, gewählt. Dieser liegt noch deutlich unter dem typischen Betriebstemperaturniveau von etwa 200°C bis 350°C für eine Wasserdampfreformierung von Methanol.

Weiterhin kann beim Starten des Verfahrens zusätzlich die Temperatur des Katalysatormaterials erfaßt und mit einem zweiten unteren Schwellwert verglichen werden, wobei dann, wenn die Temperatur diesen zweiten Schwellwert übersteigt, das Verfahren direkt durch Zugabe des sauerstoffreichen Gasstromes gestartet wird. Durch diese Unterscheidung von Kalt- und Warmstart kann Brennstoff gespart werden.

Das Verfahren nach Anspruch 11 ist speziell für das Warmhalten eines Reaktors nach Beendigung des Betries gedacht und sieht in diesem Fall vor, laufend die Temperatur des Katalysatormaterials zu überwachen. Immer dann, wenn die Temperatur unter einen dritten unteren Schwellwert fällt, wird das Katalysatormaterial solange mit einem sauerstoffhaltigen Gasstrom beaufschlagt, bis die überwachte Temperatur des Katalysatormaterials den vorgebbaren Maximalwert überschreitet. Der dritte untere Schwellwert wird hierbei so gewählt, daß eine spontane Oxidation mit dem sauerstoffhaltigen Gasstrom gewährleistet wird. Durch dieses Verfahren kann der Reaktor bei längeren Pausen warmgehalten werden, ohne dabei Brennstoff zu verbrauchen.

In Weiterbildung der Erfindung wird nach Anspruch 12 der Toleranzwert, um den die maximale Temperatur des Katalysatormaterials während der Reaktivierung über dem normalen Temperaturniveau der Brennstoffumsetzung liegen darf, auf höchstens etwa 100K, vorzugsweise höchstens etwa 20K festgelegt. Dies erlaubt kurzzeitige, unschädliche Überschreitungen der normalen Betriebstemperatur des Katalysatormaterials während seiner Reaktivierung.

Nachstehend werden vorteilhafte Realisierungen des erfindungsgemäßen Verfahrens beispielhaft und stellvertretend für weitere Realisierungen beschrieben, die sich für den Fachmann unter Anwendung der erfindungsgemäßen Lehre ergeben. Die Verfahrensbeispiele können insbesondere dazu verwendet werden, ein kupferhaltiges Katalysatormaterial periodisch zu reaktivieren, das sich in einem Reformierungsreaktor eines Brennstoffzellenfahrzeugs befindet. Solche mobilen Reformierungsreaktoren dienen dazu, den für die Brennstoffzellen benötigten Wasserstoff durch eine Oxidations- und/oder Reformierungsreaktion aus Methanol oder einem anderen Kohlenwasserstoff- bzw. Kohlenwasserstoffderivat-Brennstoff unter Beteiligung von Wasserdampf zu gewinnen.

Im betriebswarmen Zustand des Reaktors, beispielsweise bei einem Brennstoffzellenfahrzeug während der Fahrt, kann eine periodische Reaktivierung des eingesetzten Katalysatormaterials in einer ersten Variante dergestalt durchgeführt werden, daß der normale Reaktorbetrieb, der z.B. eine Wasserdampfreformierung von Methanol bei einem Betriebstemperaturniveau zwischen etwa 200°C und 350°C beinhaltet, unterbrochen und das Katalysatormaterial jeweils kurzzeitig mit Luftpulsen beaufschlagt wird, deren Dauer so gewählt ist, daß die überwachte Temperatur des Katalysatormaterials am Ende jedes Luftpulses nicht über einem Maximalwert liegt, der um einen vorgebbaren Toleranzwert über dem Betriebstemperaturniveau für die normale Umsetzungsreaktion des Einsatzstoffs liegt. Dieser Toleranzwert ist vorzugsweise nicht höher als etwa 100K und bevorzugter nicht höher als etwa 20K gewählt. Daraus ergeben sich typische Höchstdauern der Luftpulse von nicht mehr als wenige zehn Sekunden, häufig von weniger als zehn Sekunden. Zwischen aufeinanderfolgenden Luftpulsen kann sich das Katalysatormaterial, das sich durch den reaktivierenden Sauerstoffeinfluß erhitzt, wieder ausreichend unter den vorgegebenen Maximalwert abkühlen. Hierbei kann zusätzlich vorgesehen werden, daß der nächste Luftpuls erst dann zugegeben wird, wenn die überwachte Temperatur des Katalysatormaterials einen ersten Schwellwert unterschreitet.

Alternativ zur Verwendung reiner Luft kann in einer zweiten Variante vorgesehen sein, einen mit Wasserdampf verdünnten Luftstrom als sauerstoffhaltigen Gasstrom für die Reaktivierung des Katalysatormaterials einzusetzen. Durch den niedrigeren Sauerstoffanteil kann die Dauer der einzelnen Luftpulse bzw. Lufteinwirkungszyklen verlängert werden, ohne daß die Temperatur des Katalysatormaterials über den Maximalwert ansteigt. Durch entsprechende Steuerung der Verdünnung mit Wasserdampf läßt sich der Temperaturanstieg des Katalysatormaterials regulieren. Bei Bedarf kann die Verdünnung so hoch gewählt sein, daß das Katalysatormaterial während eines Reaktivierungsvorgangs statt mit aufeinanderfolgenden Pulsen ununterbrochen mit dem entsprechend verdünnten Luftstrom beaufschlagt wird, ohne daß die Temperatur des Katalysatormaterials den Maximalwert überschreitet.

Vor und/oder nach jedem Luftspülungsvorgang wird das Katalysatormaterial jeweils für kurze Zeit, typischerweise für wenige Sekunden, einer Zwischenspülung mit Wasserdampf unterzogen, um zu verhindern, daß Sauerstoff und Einsatzstoff in exothermen Stöchiometrien aufeinandertreffen, wodurch sich das Katalysatormaterial unerwünschterweise weiter aufheizen würden.

An den jeweiligen Lufspülungsvorgang schließt sich bevorzugt ein Reduktionsvorgang an, in welchem das Katalysatormaterial einer Wasser/Brennstoff-Mischung ausgesetzt wird. Da auch dieser Vorgang exotherm ist, wird hierbei kurzzeitig ein im Vergleich zum normalen Wasserdampf-Reformierungsbetrieb erhöhtes Wasser/Brennstoff-Verhältnis im zugeführten Gemisch eingestellt und so der Temperaturanstieg begrenzt.

Im mobilen Einsatzfall kann ein Reaktivierungsvorgang speziell jeweils am Ende einer Fahrt eingeleitet werden, wenn das Katalysatormaterial beginnt, sich unter das normale Betriebstemperaturniveau abzukühlen. Der Reaktivierungsvorgang kann wiederum aus einzelnen verdünnten oder unverdünnten Luftpulsen mit zwischenliegenden Abkühlphasen oder einer andauernden Zufuhr von mit Wasserdampf verdünnter Luft erfolgen, wobei jeder Reaktivierungszyklus z.B. dann abgebrochen wird, wenn die Temperatur des Katalysatormaterials die Betriebstemperatur erreicht hat, spätestens jedoch dann, wenn sie den vorgegebenen Maximalwert überschreitet. Die Reaktivierungszyklen können im Fahrzeugstillstand beliebig oft wiederholt werden, um den Aktivitätsgewinn für das Katalysatormaterial zu verbessern. Wiederum kann Wasser sowohl zur Verdünnung wie auch als Zwischenspülmedium sowie zur beschleunigten Abkühlung des Katalysatormaterials eingesetzt werden. Vorzugsweise werden Mittel zum Erkennen von Betankungsvorgängen vorgesehen und immer dann, wenn ein Betankungsvorgang gestartet wird gleichzeitig ein Reaktivierungsvorgang ausgelöst. Betankungsvorgänge werden regelmäßig in Abhängigkeit von der Betriebsdauer des Reaktors durchgeführt und bieten gleichzeitig die Gewähr, daß nach dem Auslösen des Reaktivierungsvorganges nicht das Fahrzeug und damit auch der Reaktor gestartet wird. Selbstverständlich ist es jedoch auch möglich, daß der Fahrer, beispielsweise über einen geeigneten Schalter, einen Reaktivierungsvorgang selbst auslöst.

Bei Bedarf kann der Reaktiverungsvorgang z.B. über Nacht bis zum Beginn einer nächsten Fahrt mehrmals wiederholt werden, mit dem Zusatzeffekt, daß bei Fahrtantritt bereits ein betriebswarmes Reaktorsystem vorliegt. Hierbei muß beachtet werden, daß das Katalysatormaterial nicht unter eine Temperatur fällt, bei der zusätzlich ein Brennstoff notwendig wäre, um das Katalysatormaterial wieder auf Betriebstemperatur zu bringen. Immer dann, wenn die Temperatur unter einen dritten unteren Schwellwert fällt, wird das Katalysatormaterial solange mit einem sauerstoffhaltigen Gasstrom beaufschlagt, bis die überwachte Temperatur des Katalysatormaterials den vorgebbaren Maximalwert überschreitet. Der dritte untere Schwellwert wird hierbei so gewählt, daß eine spontane Oxidation mit dem sauerstoffhaltigen Gasstrom gewährleistet wird. Durch dieses Verfahren kann der Reaktor bei längeren Pausen warmgehalten werden, ohne dabei Brennstoff zu verbrauchen.

Im Fall eines Kaltstarts des Reaktorsystems, z.B. beim Kaltstart eines Brennstoffzellenfahrzeugs, kann erfindungsgemäß ein Reaktivierungsvorgang für das Katalysatormaterial auf folgende Weise mit der erwünschten Maßnahme kombiniert werden, das Reaktorsystem möglichst schnell auf Betriebstemperatur zu bringen. Das Starten des Reaktors erfolgt hierzu unter Verwendung einer exothermen Oxidation des Brennstoffs mit in diese Start- bzw. Hochheizphase des Reaktors integrierter Luftspülung.

Dazu wird nach Auslösen des Reaktorstarts dem Katalysatormaterial zunächst ein Gemisch aus Brennstoff und Luft zugeführt. Der Sauerstoffüberschußwert wird im Falle von Methanol als Brennmittel typischerweise größer als 1,4 und bevorzugter größer als 1,5 gewählt. Hierdurch findet bereits eine wenigstens teilweise Reaktivierung des Katalysatormaterials speziell in den Zonen statt, die nach Aufbrauchen des Einsatzstoffs vom sauerstoffhaltigen Zwischenprodukt-Gemisch durchströmt werden. Die Stöchiometrie kann wahrend der Kaltstartphase auch verändert werden.

Wenn dann auf diese Weise die Temperatur des Katalysatormaterials einen vorgegebenen Umschaltwert überschreitet, wird die Zuführung des Luft-Brennstoff-Gemischs beendet und nur noch Luft zugeführt. Die Umschaltung erfolgt in einem Temperaturbereich, von dem ab die Oxidation des Katalysatormaterials und/oder der Ablagerungen auf dem Katalysatormaterial so aktiv ist, daß die weitere Erwärmung ohne Brennstoffzugabe erfolgen kann. Die dadurch verstärkt einsetzende Oxidation des Katalysatormaterials führt zu einem weiteren Temperaturanstieg desselben. Dabei wird zugelassen, daß die Temperatur des Katalysatormaterials kurzzeitig über das normale Betriebstemperaturniveau, das typischerweise im Bereich zwischen 200°C und 350°C liegt, ansteigt, jedoch um nicht mehr als den vorgegebenen Toleranzwert von z.B. höchstens 100K und bevorzugt höchstens 20K. Die Umschaltung auf reine Luftzufuhr erfolgt z.B. bei Erreichen eines Umschaltwertes zwischen 100°C und 200°C, vorzugsweise von etwa 150° C.

Wie gesagt, sind neben den oben detaillierter beschriebenen Ausführungsformen weitere Realisierungen des erfindungsgemäßen Verfahrens für den Fachmann möglich. In jedem Fall zeichnet sich die erfindungsgemäße Vorgehensweise dadurch aus, daß neben dem Einsatzstoff lediglich ein sauerstoffhaltiger Gasstrom, wie Luft, und optional Wasser benötigt werden. Diese Stoffe stehen in Reformierungsanlagen, wie sie z.B. in Brennstoffzellenfahrzeugen eingebaut sind, ohnehin zur Verfügung. Als weiterer Vorteil schränkt das erfindungsgemäße Katalysatorreaktivierungsverfahren die Nutzung des Brennstoffzellenfahrzeugs nicht besonders ein, insbesondere können die Reaktivierungsvorgänge während des laufenden Fahrbetriebs und/oder während Stillstandsphasen des Fahrzeugs durchgeführt werden.

**Patentansprüche**

1. Verfahren zur periodischen Reaktivierung von kupferhaltigem Katalysatormaterial, das in einen Reaktor zur katalytischen Umsetzung eines Kohlenwasserstoff- oder Kohlenwasserstoffderivat-Einsatzstoffs mittels einer Oxidations- und/oder einer Reformierungs-Umsetzungsreaktion eingebracht ist und sich durch die Umsetzungsreaktion allmählich deaktiviert, bei dem

   - das Katalysatormaterial mit einem sauerstoffhaltigen Gasstrom beaufschlagt wird,
   **dadurch gekennzeichnet, daß**
   - bei betriebswarmem Reaktor die Beaufschlagung des Katalysatormaterials mit dem sauerstoffhaltigen Gasstrom intermittierend während Reaktivierungsintervallen erfolgt, zwischen denen Abkühlphasen vorgesehen sind und die jeweils spätestens dann beendet werden, wenn die überwachte Temperatur des Katalysatormaterials einen Maximalwert überschreitet, der um einen vorgebbaren Toleranzwert über einem vorgegebenen Betriebstemperaturniveau liegt.

2. Verfahren nach Anspruch 1,
   **dadurch gekennzeichnet, daß**
   die Reaktivierung nach einer erfolgten Reaktivierung frühestens dann erneut gestartet wird, wenn die überwachte Temperatur des Katalysatormaterials einen ersten Schwellwert unterschreitet.

3. Verfahren nach Anspruch 1,

**dadurch gekennzeichnet, daß**
als sauerstoffhaltiger Gasstrom ein mit Wasserdampf verdünnter Luftstrom verwendet wird.

4. Verfahren nach Anspruch 1,
**dadurch gekennzeichnet, daß**
vor und/oder nach einer jeweiligen Beaufschlagung des Katalysatormaterials mit dem sauerstoffhaltigen Gasstrom eine Zwischenspülung desselben mit Wasserdampf durchgeführt wird.

5. Verfahren nach Anspruch 1,
**dadurch gekennzeichnet, daß**
die Reaktivierung bei einem in einem Fahrzeug angeordneten Reaktor durch eine Erkennung eines Betankungsvorganges oder vom Fahrer gestartet wird.

6. Verfahren zur periodischen Reaktivierung von kupferhaltigem Katalysatormaterial, das in einen Reaktor zur katalytischen Umsetzung eines Kohlenwasserstoff- oder Kohlenwasserstoffderivat-Einsatzstoffs mittels einer Oxidations- und/oder einer Reformierungs-Umsetzungsreaktion eingebracht ist und sich durch die Umsetzungsreaktion allmählich deaktiviert, insbesondere nach Anspruch 1, bei dem

- das Katalysatormaterial mit einem sauerstoffhaltigen Gasstrom beaufschlagt wird,
**dadurch gekennzeichnet, daß**
- in Reaktorkaltstartphasen dem Katalysatormaterial zunächst ein Gemisch aus einem Brennstoff und einem sauerstoffhaltigen Gasstrom zugeleitet wird, bis die überwachte Temperatur des Katalysatormaterials einen vorgebbaren Umschaltwert überschreitet, und anschließend nur noch der sauerstoffhaltige Gasstrom zugeleitet wird, wobei dessen Zuführung spätestens dann unterbrochen wird, wenn die Temperatur des Katalysatormaterials einen Maximalwert überschreitet, der um einen vorgebbaren Toleranzwert über einem vorgegebenen Betriebstemperaturniveau liegt.

7. Verfahren nach Anspruch 6,
**dadurch gekennzeichnet, daß**
der Sauerstoff im anfänglichen Gemisch aus Brennstoff und sauerstoffhaltigem Gasstrom mit einem überstöchiometrischen Anteilswert enthalten ist.

8. Verfahren nach Anspruch 6 oder 7,
**dadurch gekennzeichnet, daß**
die Stöchiometrie des Gasstromes während der Kaltstartphase veränderlich ist.

9. Verfahren nach Anspruch 6 bis 8,

**dadurch gekennzeichnet, daß**
der Umschaltwert zwischen 100° C und 200° C, vorzugsweise bei etwa 150° C, liegt.

10. Verfahren nach Anspruch 6,
**dadurch gekennzeichnet, daß**
beim Starten die Temperatur des Katalysatormaterials erfaßt und mit einem zweiten unteren Schwellwert verglichen wird, und daß dann, wenn die Temperatur des Katalysatormaterials über dem zweiten unteren Schwellwert liegt, das Verfahren direkt durch Zugabe des sauerstoffhaltigen Gasstromes gestartet wird.

11. Verfahren zur periodischen Reaktivierung von kupferhaltigem Katalysatormaterial, das in einen Reaktor zur katalytischen Umsetzung eines Kohlenwasserstoff- oder Kohlenwasserstoffderivat-Einsatzstoffs mittels einer Oxidations- und/oder einer Reformierungs-Umsetzungsreaktion eingebracht ist und sich durch die Umsetzungsreaktion allmählich deaktiviert, insbesondere nach Anspruch 1, bei dem

- das Katalysatormaterial mit einem sauerstoffhaltigen Gasstrom beaufschlagt wird,
**dadurch gekennzeichnet, daß**
- zum Warmhalten des Reaktors die Temperatur des Katalysatormaterials auch nach dem Beenden des Betriebs laufend erfaßt und mit einem dritten unteren Schwellwert verglichen wird, und daß nach dem Unterschreiten des dritten unteren Schwellwertes das Katalysatormaterials mit dem sauerstoffhaltigen Gasstrom beaufschlagt wird, wobei dessen Zuführung spätestens dann unterbrochen wird, wenn die Temperatur des Katalysatormaterials einen Maximalwert überschreitet, der um einen vorgebbaren Toleranzwert über einem vorgegebenen Betriebstemperaturniveau liegt.

12. Verfahren nach einem der Ansprüche 1 bis 11, weiter
**dadurch gekennzeichnet, daß**
der Toleranzwert höchstens etwa 100K, vorzugsweise höchstens etwa 20K, beträgt.